# EUROPEAN PATENT APPLICATION

(11) **EP 4 576 390 A1**
(43) Date of publication of application: **25.06.2025**
(21) Application number: 24219452.0
(22) Date of filing: 12.12.2024
(51) Int. Cl.: H01M 50/446, H01M 50/403, H01M 50/486, H01M 50/489, H01M 50/451, H01M 10/052

(54) **SEPARATOR AND SECONDARY BATTERY COMPRISING THE SAME**

(30) Priority: 19.12.2023 KR 20230185429
(71) Applicant: SK Innovation Co., Ltd., Seoul 03188 (KR); SK ie technology Co., Ltd., Jongno-gu Seoul 03188 (KR)
(72) Inventor: LEE, Chang Hee, Daejeon 34124 (KR); CHANG, Kyeol, Daejeon 34124 (KR); JI, Sang Yoon, Daejeon 34124 (KR)
(74) Representative: Prüfer & Partner mbB Patentanwälte · Rechtsanwälte

(57) **Abstract**

Embodiment of the present disclosure relate to a separator and a secondary battery comprising the same. According to an aspect of the present disclosure, a separator comprising: a porous substrate; and an inorganic particle layer which is formed on at least one surface of the porous substrate and comprises a binder and inorganic particles, wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge, is provided.

## Description

### TECHNICAL FIELD

The following disclosure relates to a separator and a secondary battery comprising the same.

### BACKGROUND

Recently, a lithium secondary battery has been required to have a large capacity so that it may be applied to electric vehicles, energy storage devices, and to similar or related objects, and as the capacity of the lithium secondary battery is increased, fire and explosion risks are increased, and thus, various studies are being conducted in order to improve this.

A common lithium secondary battery is manufactured by wrapping a cell formed of a negative electrode, a positive electrode, and a separator placed between the negative electrode and the positive electrode into a cylinder or stacking the cell, inserting the cell into a pouch, and injecting a liquid electrolyte into the pouch. An electrolyte allows charges between electrodes to move well, and generally comprises a nonaqueous organic solvent and a salt.

When a lithium secondary battery using an electrolyte comprising a nonaqueous organic solvent and a salt is stored at a high temperature for a long time, a problem of ignition and explosion of the lithium secondary battery due to various factors may occur.

As an example, in a lithium secondary battery using a carbonate-based organic solvent, a negative electrode passive film (solid electrolyte interphase (SEI) film), which is an electrolyte decomposition product, is formed on the surface of the negative electrode, resulting in decomposition of the carbonate-based organic solvent to cause gassing inside the secondary battery. Otherwise, in the lithium secondary battery, an electrolyte may react with moisture very sensitively to cause gassing. The gas may comprise hydrogen gas (H₂), carbon monoxide gas (CO), carbon dioxide gas (CO₂), methane gas (CH₄), hydrogen fluoride, hydrogen sulfide, and similar or related compounds, depending on the type of nonaqueous organic solvent and negative electrode active material.

The thickness is expanded during charging due to the gassing, and when a lithium secondary battery is left at a high temperature in a state of being charged to a maximum capacity, a side reaction in which an electrolyte reacts with the surface of a negative electrode may occur. Therefore, the lithium secondary battery continuously produces gas due to the side reaction to increase internal pressure and expand the volume, resulting in performance degradation such as a decrease in lithium secondary battery life at a high temperature.

Therefore, in order to improve the performance, e.g. by reducing or even performance degradation, studies continue on changing electrolyte components of an electrolyte, changing the type of negative electrode materials, or changing similar or related components of an electrochemical device such as a secondary battery such as a lithium secondary battery.

### SUMMARY

An embodiment of the present disclosure is directed to providing a separator for an electrochemical device, which provides improved properties, e.g., which may significantly decrease gas emissions.

Another embodiment of the present disclosure is directed to providing a secondary battery having excellent characteristics, such as resistance characteristics, and life characteristics due to long-term operation.

Still another embodiment of the present disclosure is directed to providing a secondary battery which provides improved characteristics, e.g., which may significantly suppress volume expansion.

The separator of the present disclosure and the secondary battery comprising the same may be widely applied to the green technology field such as electric vehicles, battery charging stations, and additionally, solar power generation and wind power generation using batteries. In addition, the separator of the present disclosure and the secondary battery comprising the same may be used in eco-friendly electric vehicles, hybrid vehicles, and similar or related vehicles for suppressing air pollution and greenhouse gas emission to prevent climate change.

In one general aspect, a separator for an electrochemical device such as a secondary battery, such as a lithium secondary battery, comprises: a porous substrate; and an inorganic particle layer which is formed on or above at least one, preferably on two, surface(s) of the porous substrate and comprises a binder and inorganic particles, wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge, and one cycle of the charge and discharge is charging to 4.2 V at a constant current of 1 C at room temperature, charging at a constant voltage until the current becomes 0.01 C while maintaining 4.2 V, and then discharging to 2.5 V at a constant current of 1 C.

In the present disclosure the FT-IR measurement may be applied to a separator when incorporated into a reference battery. For example, the separator may be incorporated into a reference battery by placing the separator between a positive electrode and a negative electrode, winding, and addition to an aluminum pack, then injecting an electrolyte in which 1 M lithium hexafluorophosphate (LiPF₆) was dissolved in a solution comprising ethylene carbonate and diethyl carbonate at a volume ratio of 1:1, and then sealing the pack to obtain a reference secondary battery having a capacity of 2 Ah.

In a preferred embodiment, an inorganic particle layer is formed on both surfaces of the porous substrate.

In an example embodiment, the binder may comprise a nitrile group.

In an example embodiment, the binder may comprise a structural unit structurally derived from a (meth)acrylonitrile-based monomer.

In an example embodiment, the binder may further comprise any one or more structural units selected from the group consisting of a structural unit derived from a (meth)acrylamide-based monomer and a structural unit derived from a (meth)acrylate-based monomer having a polar group. Herein, the polar group of the (meth)acrylate-based monomer having a polar group may be a hydroxyl group, a carboxylic acid group, or an aldehyde group, and specifically, a hydroxyl group, but is not limited thereto.

In an example embodiment, the binder may have a weight average molecular weight of 10,000 to 2,000,000 g/mol. In a preferred example embodiment, the binder has a weight average molecular weight of 100,000 to 400,000 g/mol, more preferably of 200,000 to 300,000 g/mol, and even more preferably of 250,000 g/mol to 300,000 g/mol.

In an example embodiment, the binder may be a particulate binder.

In an example embodiment, the binder may be a water-dispersible binder.

In an example embodiment, the binder may have a glass transition temperature of 40 to 80°C. In a preferred example embodiment, the binder has a glass transition temperature of 50 to 70 °C, more preferably of 50 to 60 °C.

In an example embodiment, the binder may be comprised at 1 to 30 wt% based on the total weight of the inorganic particle layer.

In an example embodiment, the inorganic particles may comprise any one or two or more selected from the group consisting of metal hydroxides, metal oxides, metal nitrides, metal carbides, and metal sulfates.

In an example embodiment, the porous substrate may comprise a polar functional group on the surface.

In another general aspect, a method of manufacturing a separator comprises: preparing a slurry composition comprising a binder and inorganic particles; and applying the slurry composition on or above, preferably on, at least one, preferably on two, surface (s) of a porous substrate to form an inorganic particle layer, wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge, and one cycle of the charge and discharge is charging to 4.2 V at a constant current of 1 C at room temperature, charging at a constant voltage until the current becomes 0.01 C while maintaining 4.2 V, and then discharging to 2.5 V at a constant current of 1 C.

In an example embodiment, the binder may comprise a nitrile group.

In an example embodiment, the binder may comprise a structural unit derived from a (meth) acrylonitrile-based monomer.

In an example embodiment, the binder may be a particulate binder.

In an example embodiment, the binder may have a glass transition temperature of 40 to 80°C.

In an example embodiment, before forming the inorganic particle layer, introducing a polar functional group to the surface of the porous substrate by a hydrophilic surface treatment may be further comprised.

In an example embodiment, the hydrophilic surface treatment may be performed by comprising one or more of a corona discharge treatment and a plasma discharge treatment.

In an example embodiment, after forming the inorganic particle layer, aging the porous substrate on which the inorganic particle layer is formed may be further comprised.

In still another general aspect, a secondary battery comprises: a positive electrode; a negative electrode; the separator as described above interposed between the positive electrode and the negative electrode; and an electrolyte.

Other features and aspects will be apparent from the following detailed description, the drawings, and the claims.

### BRIEF DESCRIPTION OF THE DRAWINGS

FIG. 1 is a FT-IR spectrum measured before performing charge and discharge of the separator according to Example 1.
FIG. 2 is a FT-IR spectrum measured after performing charge and discharge of the separator according to Example 1.
FIG. 3 is a FT-IR spectrum measured before performing charge and discharge of the separator according to Comparative Example 1.
FIG. 4 is a FT-IR spectrum measured after performing charge and discharge of the separator according to Comparative Example 1.

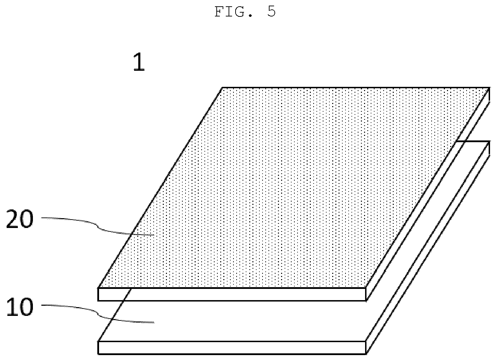

FIG. 5 is a schematic structure of a separator according to one embodiment. 1: Separator; 10: Porous substrate; 20: Inorganic particle layer.

### DETAILED DESCRIPTION OF EMBODIMENTS

Hereinafter, the present disclosure will be described in detail. However, it is only illustrative and the present disclosure is not limited to the specific embodiments which are illustratively described in the present disclosure.

In addition, the singular form used in the specification and claims appended thereto may be intended to comprise a plural form also, unless otherwise indicated in the context.

In addition, the numerical range used in the present specification comprises all values within the range comprising the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also comprised in the defined numerical range.

Furthermore, throughout the specification, unless explicitly described to the contrary, "comprising" any constituent elements will be understood to imply further inclusion of other constituent elements rather than exclusion of other constituent elements.

In the present specification, it will be understood that when an element such as a layer, film, region, or substrate is referred to as being "on" or "above" another element, it can be directly on the other element or intervening elements may also be present.

In the present specification, room temperature refers to 20±5°C, and as an example, may be 25°C.

In the present specification, "average particle diameter" refers to "D50", and "D50" refers to a particle diameter of a particle, such as an inorganic particle, or a binder particle (particulate binder) as disclosed herein, corresponding to 50% in terms of a volume-based integrated fraction. The average particle diameter may be derived from particle size distribution results obtained by collecting a sample of particles, such as inorganic particles, or binder particles (particulate binder) as disclosed herein, to be measured in accordance with the standard of ISO 13320-1 and performing analysis using S3500 available from MICROTRAC. It is known to a skilled person that a specific particle size distribution results from the average particle diameter D50.

In the present disclosure, a glass transition temperature (Tg) refers to a temperature range in which glass transition occurs, and refers to a value measured using a dilatometer or a differential scanning calorimeter (DSC).

According to an example embodiment of the present disclosure, a separator having a first peak and a second peak at specific positions in a FT-IR spectrum measured after performing charge and discharge for long-term cycles may effectively suppress a decomposition reaction of an electrolyte to significantly decrease gas emissions. When the separator is used, battery resistance is reduced and a secondary battery having significantly excellent life characteristics may be provided. In addition, a secondary battery having characteristics of significantly decreasing changes such as volume expansion of a battery over time may be provided.

The present disclosure provides a separator(1) comprising: a porous substrate(10); and an inorganic particle layer(20) which is formed on or above, preferably on, at least one, preferably on two, surface(s) of the porous substrate and comprises a binder and inorganic particles, wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge. Herein, one cycle of the charge and discharge is charging to 4.2 V at a constant current of 1 C at room temperature, charging at a constant voltage until the current becomes 0.01 C while maintaining 4.2 V, and then discharging to 2.5 V at a constant current of 1 C. In addition, the charge and discharge may be performed using a battery for testing which is manufactured by interposing the separator according to an example embodiment between a positive electrode and a negative electrode, performing winding and assembly, and then injecting a liquid electrolyte. The battery for testing may be a battery provided with a positive electrode comprising a positive electrode active material layer containing a lithium composite oxide; a negative electrode comprising a negative electrode active material layer containing a graphite-based material; the separator according to an example embodiment interposed between the positive electrode and the negative electrode; and an electrolyte in which LiPF₆ is dissolved at a concentration of 1 M in a mixed solvent of ethylene carbonate and diethyl carbonate at a volume ratio of 1:1.

In an example embodiment, the first peak is a peak having the highest intensity in a range of 3800 to 3400 cm⁻¹, and specifically, may be a peak having the highest intensity in a range of 3700 to 3500 cm⁻¹ or in a range of 3650 to 3550 cm⁻¹.

In an example embodiment, the second peak is a peak having the highest intensity in a range of 1800 to 1500 cm⁻¹, and specifically, may be a peak having the highest intensity in a range of 1750 to 1500 cm⁻¹ or in a range of 1700 to 1500 cm⁻¹.

In an example embodiment, the separator may further have a third peak in a range of 1800 to 1500 cm⁻¹ in addition to the second peak. Herein, the third peak refers to a peak having a lower intensity than the second peak in a range of 1800 to 1500 cm⁻¹. As an example embodiment, the third peak may be a peak having a lower intensity than the second peak in a range of 1750 to 1500 cm⁻¹ or 1700 to 1500 cm⁻¹.

As a specific example, the second peak may be a peak having the highest intensity in a range of 1580 to 1500 cm⁻¹ or 1550 to 1500 cm⁻¹, and the third peak may be a peak having the highest peak in a range of 1800 to 1600 cm⁻¹ or 1700 to 1600 cm⁻¹.

As an example embodiment, the separator before performing charge and discharge may have neither the first peak shown in a range of 3800 to 3400 cm⁻¹ nor the second peak shown in a range of 1800 to 1500 cm⁻¹ in FT-IR spectrum measurement.

Since the separator has the first peak and the second peak shown at specific positions in the FT-IR spectrum measured under the conditions as described above, decomposition products of an electrolyte which are a cause of performance degradation are removed to significantly decrease gas emissions. Specifically, the decomposition products of an electrolyte may be removed by a chemical reaction with a functional group positioned on the surface of the separator, and the first peak and the second peak may be produced after performing charge and discharge by the chemical reaction. The decomposition products of an electrolyte comprise hydrogen gas (H₂), carbon monoxide gas (CO), carbon dioxide gas (CO₂), methane gas (CH₄), hydrogen fluoride, hydrogen sulfide, and similar or related compounds, but are not limited thereto, and may be changed depending on the types of used nonaqueous organic solvent and negative electrode active material. For example, a functional group positioned on the surface of the separator may be reduced by a reaction with hydrogen gas, and thus, hydrogen gas as an example of the decomposition product of the electrolyte may be removed to significantly decrease gas emissions, but the present disclosure is not particularly limited thereto. As another example, the functional group reduced by a reaction with hydrogen gas may react with a decomposition product of a nonaqueous organic solvent used in the electrolyte, and thus, the decomposition product of the nonaqueous organic solvent which is a cause of performance degradation may be removed, but the present disclosure is not particularly limited thereto.

As an example embodiment, a chemical reaction between the functional group positioned on the surface of the separator and the decomposition product of the electrolyte may be promoted by a metal comprised in a positive electrode active material which acts as a catalyst, but is not particularly limited thereto. The metal comprised in the positive electrode active material may be a metal comprised in the positive electrode active material which may reversibly intercalate or deintercalate lithium ions, and as an example, may be any one or more selected from the group consisting of cobalt, manganese, nickel, iron, and aluminum.

As an example embodiment, the binder may comprise a nitrile group, and specifically, may comprise a structural unit derived from a (meth)acrylonitrile-based monomer.

As an example embodiment, the binder may further comprise any one or more structural units selected from the group consisting of a structural unit derived from a (meth)acrylamide-based monomer and a structural unit derived from a (meth)acrylate-based monomer having a polar group, as well as a structural unit derived from a (meth)acrylonitrile-based monomer. When the structural unit derived from a (meth)acrylamide-based monomer and/or the structural unit derived from a (meth)acrylate-based monomer having a polar group is/are further comprised, together with the structural unit derived from a (meth)acrylonitrile-based monomer, adhesive strength to a positive electrode active material layer is increased, so that a reaction with a decomposition product of an electrolyte occurs more effectively to further decrease gas emission, which is thus preferred.

Herein, the polar group of the (meth)acrylate-based monomer having a polar group may be a hydroxyl group, a carboxylic acid group, or an aldehyde group, and specifically, a hydroxyl group, but is not limited thereto.

As an example embodiment, the binder may be a particulate binder, and the specific shape of the particles is not particularly limited. For example, the particulate binder may have a spherical, oval, plate, or irregular particle shape.

The particulate binder may have an average particle diameter (D50) of 10 nm or more, 20 nm or more, 50 nm or more and 10 um or less, 5 um or less, 2 um or less, 500 nm or less, or a value between the numerical values. As an example embodiment, the particulate binder may have an average particle diameter (D50) of 10 nm to 10 um, 20 nm to 5 um, 50 nm to 2 um, or 50 nm to 500 nm. In a preferred embodiment, the particulate binder has an average particle diameter (D50) of 50 nm to 300 nm, preferably of 90 nm to 150 nm, more preferably of 100 nm to 115 nm, and even more preferably of 100 nm to 110 nm Most preferred, the D50 is about 110 nm. When the particulate binder has the average particle diameter, the binder is uniformly dispersed in a water-based slurry composition to cause the reaction between the functional group on the surface of the separator and the decomposition product of the electrolyte more effectively, which may further decrease gas emissions.

As an example embodiment, the binder may have a glass transition temperature of 40 to 80°C. Since the binder having the glass transition temperature in the range described above is comprised, the separator according to an example embodiment may trap hydrogen and/or decomposed electrolyte components occurring in a charging and discharging process of a battery. In addition, a battery to which the separator described above is applied may have suppressed volume expansion and achieve an effect of significantly increased charge and discharge performance.

The binder used in the separator of the present disclosure may be a particulate binder having a glass transition temperature of 40 to 80°C and comprising a nitrile group. The separator having an inorganic particle layer comprising the particulate binder may trap hydrogen and/or decomposed electrolyte components occurring in a charging and discharging process. In addition, a battery to which the separator described above is applied may have suppressed volume expansion and achieve an effect of significantly increased charge and discharge performance. As an example embodiment, the binder may have the glass transition temperature of 80°C or lower, 70°C or lower, 65°C or lower, 60°C or lower and 40°C or higher, 45°C or higher, 50°C or higher, or a value between the numerical values. As an example embodiment, the binder may have the glass transition temperature of 40 to 80°C, 40 to 70°C, 45 to 65°C, or 50 to 60°C. The particulate binder satisfying the glass transition temperature is present as a particulate form in the slurry composition, and the reaction between the functional group on the surface of the separator and the decomposition product of the electrolyte occurs more effectively to further decrease gas emissions.

As an example embodiment, the binder may be a copolymer comprising a structural unit derived from a (meth)acrylonitrile-based monomer, a structural unit derived from a (meth)acrylamide-based monomer, and a structural unit derived from a (meth)acrylate-based monomer having a polar group. Accordingly, the reaction between the functional group on the surface of the separator and the decomposition product of the electrolyte may occur more effectively to further decrease gas emissions.

As an example embodiment, the binder may further comprise an acryl-based monomer which is not comprised in the monomer described above. For example, the binder may further comprise any one or more of a structural unit derived from a (meth)acrylate-based monomer having no polar group and a structural unit derived from a (meth)acrylic acid monomer.

As an example, the binder may be a copolymer comprising 0.1 to 20 wt% of a (meth)acrylonitrile-based monomer, 20 to 70 wt% of a (meth)acrylamide-based monomer, 10 to 50 wt% of a (meth)acrylic acid monomer, 0.1 to 10 wt% of a (meth)acrylate monomer having no polar group, and 0.1 to 20 wt% of a (meth)acrylate monomer having a polar group. As an example embodiment, the particulate binder may be a copolymer comprising 40 to 60 wt% of a (meth)acrylamide-based monomer, 1 to 15 wt% of a (meth) acrylonitrile-based monomer, 20 to 40 wt% of a (meth) acrylic acid monomer, 1 to 10 wt% of a (meth)acrylate-based monomer having no polar group, and 1 to 15 wt% of a (meth)acrylate monomer having a polar group.

As an example embodiment, the binder may have a weight average molecular weight in terms of polyethylene glycol measured using gel transmission chromatography of 10,000 g/mol or more, 100,000 g/mol or more, 200,000 g/mol or more, 2,000,000 g/mol or less, 1,000,000 g/mol or less, 500,000 g/mol or less, or a value between the numerical values. As an example embodiment, the binder may have a weight average molecular weight of 10,000 to 2,000,000 g/mol, 100,000 to 2,000,000 g/mol, 200,000 to 1,000,000 g/mol, or 200,000 to 500,000 g/mol. Measurement of the weight average molecular weight was performed specifically by using GPC (EcoSEC HLC-8320 GPC Reflective Index detector from Tosoh Corporation) using TSKgel guard PWx, two columns of TSKgel GMPWxl and TSKgel G2500PWxl (7.8×300 mm) as a GPC column, a 0.1 M aqueous NaNO₃ solution as a developing solvent, and polyethylene glycol as a standard, and performing analysis at 40°C at a flow rate of 1 mL/min.

As an example embodiment, the particulate binder may be a water-dispersible binder provided as a particulate form in a water-based slurry composition. The binder is a water-dispersible form, and since it has low viscosity even with an increased content of the binder, it has excellent coating properties. In addition, the water-dispersible binder may be uniformly dispersed with inorganic particles in an applied state, and may be melted under a drying condition of about 60°C or under an aging condition of about 80°C or lower and be diffused locally and applied. Accordingly, since the separator of an example embodiment has improved adhesive strength to a positive electrode and a larger contact surface area between a positive electrode and an electrolyte, it may have an effect of trapping hydrogen, an effect of trapping decomposed electrolyte components, and similar or related effects, which are intended to be achieved in the present disclosure. In addition, a battery to which the separator described above is applied may have suppressed volume expansion and achieve an effect of significantly increased charge and discharge performance.

The method of preparing a binder is not particularly limited as long as the binder according to an example embodiment described above is provided, but in an example embodiment, the binder may be provided by emulsion polymerization or suspension polymerization.

When a slurry comprising an aqueous binder prepared by solution polymerization and inorganic particles is coated, specific peaks to be implemented in the present disclosure are not observed in the FT-IR spectrum measured after 600 cycles of charge and discharge, so that sufficient hydrogen trap effect may not achieved.

As an example embodiment, the binder may be comprised at 1 wt% or more, 3 wt% or more, 3.5 wt% or more, 5 wt% or more, 7 wt% or more and 30 wt% or less, 20 wt% or less, 15 wt% or less, or a value between the numerical values, based on the total weight of the inorganic particle layer. As an example embodiment, the binder may be comprised at 1 to 30 wt%, 3 to 30 wt%, 3.5 to 20 wt%, 5 to 20 wt%, or 7 to 15 wt%; or the binder may be comprised at 3 to 20 wt%, 3 to 10 wt%, 3.2 to 8 wt%, or 3.2 to 7.2 wt%, based on the total weight of the inorganic particle layer. The content may correspond to a very excessive amount as compared with the commonly used content of the binder of less than 3 wt%. Since the separator according to an example embodiment uses an excessive amount of the binder, adhesive strength to a positive electrode active material layer is strengthened, and hydrogen in the battery as a by-product of an electrolyte and/or decomposed electrolyte components may be trapped more effectively. Specifically, hydrogen gas occurring by moisture comprised in the electrolyte may be trapped by a nitrile group of the binder (see the following Chemical Formula 1). In addition, since the hydrogen gas is trapped, hydrogen fluoride (HF), water vapor (H₂O), and similar or related compounds which are the cause of hydrogen gas production may be removed. Herein, a metal comprised in the positive electrode active material may act as a catalyst in a reaction between the nitrile group as shown in the following Chemical Formula 1 and the hydrogen gas. R-CN of the following Chemical Formula 1 refers to the binder according to an example embodiment of the present disclosure:

[Chemical Formula 1] R-CN + H₂ → R-CH₂NH₂

In addition, an amine group produced by the reaction between the nitrile group and the hydrogen gas is also considered to increase an effect of trapping electrolyte by-products, as follows, though the cause is not clear. Since the following Chemical Formula 2 is the case of using an electrolyte comprising ethylene carbonate, and only an example for describing the present disclosure, the present disclosure is not limited thereto.

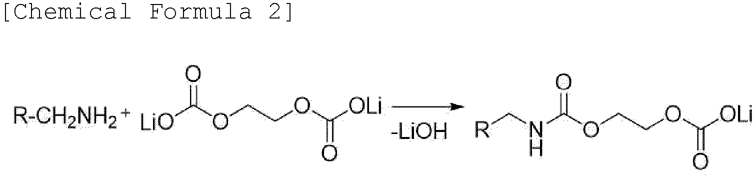

In an example embodiment, the inorganic particle layer may comprise a binder and inorganic particles, and may be a porous inorganic particle layer in which the inorganic particles are connected and fixed by the binder to form pores. The inorganic particle layer is formed from the slurry composition that has been prepared as disclosed herein, that has been applied on one or both surface (s) of the porous substrate, and that has been subjected to drying at a suitable temperature, e.g., at 50°C. In other words, the dried slurry composition that has been applied to one or both surface(s) of the porous substrate represents the inorganic particle layer of the separator. In an example embodiment, the inorganic particle layer is provided on at least one surface of the porous substrate, may occupy an area fraction of 60% or more, 70% or more, 80% or more, or 90% or more, based on an overall surface of the porous substrate, and preferably, may be formed on the area of the porous substrate of 100%.

In an example embodiment, the inorganic particle layer may be coated on one or both surfaces of the porous substrate, and when the inorganic particle layer is coated on both surfaces of the porous substrate, the thicknesses of the inorganic particle layers coated on one surface and the other surface may be the same or different. Though it is not particularly limited, in an example embodiment, the total thickness of the inorganic particle layer formed on the porous substrate may be 0.1 um or more, 0.5 um or more, 1 um or more and 15 um or less, 10 um or less, 5 um or less, or a value between the numerical values. In a specific example embodiment, the total thickness of the inorganic particle layer may be 0.1 to 15 µm, 0.5 to 10 um, or 1 to 5 um.

In an example embodiment, the inorganic particles are not limited as long as they are inorganic particles used in the art. As a non-limiting example, the inorganic particles may comprise any one or two or more selected from the group consisting of metal hydroxides, metal oxides, metal nitrides, metal carbides, and metal sulfates. For example, the inorganic particles may comprise any one or two or more selected from the group consisting of magnesium oxide (MgO), magnesium hydroxide (Mg(OH)₂), alumina (Al₂O₃), boehmite (γ-AlO(OH)), aluminum hydroxide (Al(OH)₃), silica (SiO₂), silicon carbide (SiC), calcium oxide (CaO), titanium dioxide (TiO₂), strontium titanate (SrTiO₃), barium titanate (BaTiO₃), barium sulfate (BaSO₄), zinc oxide (ZnO), yttrium oxide (Y₂O₃), zirconium oxide (ZrO₂), tin oxide (SnO₂), cerium oxide (CeO₂), and optionally similar or related compounds. In terms of battery stability, the inorganic particles may be preferably any one or two or more metal hydroxide particles selected from the group consisting of boehmite, aluminum hydroxide (Al(OH)₃), and magnesium hydroxide (Mg(OH)₂).

In an example embodiment, the shape of the inorganic particles is not limited, and may be spherical, oval, needle-shaped, and similar shapes.

In an example embodiment, the inorganic particles may have an average particle diameter (D50) of 0.01 um or more, 0.1 um or more, 0.5 um or more and 1.5 um or less, 1.0 um or less, or a value between the numerical values. As an example embodiment, the inorganic particles may have the D50 of 0.01 to 1.5 µm, 0.1 to 1.5 µm, or 0.5 to 1.0 um, but it may be changed as long as it does not go beyond the scope of the present disclosure. In a preferred embodiment, the inorganic particles have an average particle diameter (D50) of about 800 nm.

In an example embodiment, as the porous substrate, a porous polymer film, a sheet, a woven fabric, a non-woven fabric, and similar or related material manufactured from a polymer used as a separator may be variously used, and also, a porous substrate having a laminated structure in which each layer is laminated in two or more layers may be comprised.

In an example embodiment, the porous substrate may be a polyolefin-based porous substrate such as polyethylene, polypropylene, or copolymers thereof, but is not limited thereto, and all porous substrates known as a porous substrate of a separator of an electrochemical device may be used.

In an example embodiment, the porous substrate may have a thickness of 1 um or more, 3 um or more, 5 um or more and 100 um or less, 50 um or less, 30 um or less, 20 um or less, 15 um or less, or a value between the numerical values, and 1 to 100 µm, specifically, for implementing a high capacity battery, 3 to 50 µm, 5 to 20 um, or 5 to 15 um. Though it is not limited thereto, the porous substrate may be manufactured by stretching.

In an example embodiment, the porous substrate may have a porosity of 20 to 60% or 30 to 60%, but is not limited thereto.

In an example embodiment, the porous substrate may have a Gurley permeability of 10 sec/100 cc or more, 25 sec/100 cc or more and 500 sec/100 cc or less, 200 sec/100 cc or less, 150 sec/100 cc or less, or a value between the numerical values, or 10 to 500 sec/100 cc, 25 to 200 sec/100 cc, or 25 to 150 sec/100 cc, but is not limited thereto.

In an example embodiment, the porous substrate may comprise a polar functional group on the surface. Herein, the polar functional group may be, for example, a carboxylic acid group, an aldehyde group, or a hydroxyl group, but is not limited thereto. Since the separator according to an example embodiment comprises the porous substrate comprising the polar functional group on the surface, bonding between the particulate binder having a glass transition temperature of 40 to 80°C and comprising a nitrile group and the polar functional group may be increased. Accordingly, separation of the positive electrode active material and the separator is prevented to allow more close contact, and a trap effect of hydrogen occurring by catalysis of the positive electrode active material may be more improved.

The polar group may be introduced by a hydrophilic surface treatment. As an example embodiment, though the means is not limited, the surface treatment may be performed by comprising one or more of a corona discharge treatment and a plasma discharge treatment, and performed in the presence of one or more selected from oxygen, air, and ozone.

Hereinafter, a method of manufacturing a separator of the present disclosure will be described.

The method of manufacturing a separator according to an example embodiment of the present disclosure comprises: preparing a slurry composition comprising a binder and inorganic particles; and applying the slurry composition on at least one surface of a porous substrate to form an inorganic particle layer, wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge.

Since the descriptions of the separator, the porous substrate, the inorganic particle layer, the inorganic particles, and the binder are as described above, detailed descriptions thereof will be omitted.

As the method of preparing a slurry composition, any common method known in the art may be applied without limitation, and though it is not particularly limited, according to a non-limiting example, the slurry may be prepared by stirring and dispersing inorganic particles and a binder, and agglomerated inorganic particles may be dispersed using a ball mill.

The slurry composition comprises inorganic particles, a binder, and a dispersing solvent, and the dispersing solvent may be water, lower alcohols such as ethanol, methanol, and propanol, dispersing solvents such as dimethylformamide, acetone, tetrahydrofuran, diethyl ether, methylene chloride, DMF, N-ethyl-2-pyrrolidone, hexane, and cyclohexane, or a mixture thereof, but is not necessarily limited thereto.

In an example embodiment, the solid content of the slurry composition may be, though is not particularly limited, for example, 1 to 50 wt%, 5 to 40 wt%, or 10 to 35 wt%, but is not limited thereto.

In an example embodiment, the slurry composition may comprise 70 to 99 wt% of the inorganic particles and 1 to 30 wt% of the binder, based on the total weight of the solid content. Specifically, the inorganic particles may be comprised in the slurry composition at 70 to 97 wt%, 80 to 96.5 wt%, 80 to 95 wt%, or 85 to 93 wt%, based on the total weight of the solid content. Specifically, the binder may be comprised in the slurry composition at 3 to 30 wt%, 3.5 to 20 wt%, 5 to 20 wt%, or 7 to 15 wt%, based on the total weight of the solid content. The method of manufacturing a separator according to an example embodiment may further comprise: before forming the inorganic particle layer, introducing a polar functional group to the surface of the porous substrate by a hydrophilic surface treatment. Herein, the polar functional group may be, for example, a carboxylic acid group, an aldehyde group, or a hydroxyl group, but is not limited thereto. In an example embodiment, the hydrophilic surface treatment may be performed by comprising one or more of a corona discharge treatment and a plasma discharge treatment.

As a method of applying the slurry composition, any common method known in the art may be applied without limitation, and according to a non-limiting example, roll coating, spin coating, dip coating, bar coating, die coating, slit coating, inkjet printing, and a combination of these methods may be applied. The applied slurry may be dried and formed into an inorganic particle layer. Drying for forming the inorganic particle layer is not particularly limited, but may be performed at 100°C or lower or 30 to 60°C.

The method of manufacturing a separator according to an example embodiment may further comprise: after forming the inorganic particle layer, aging the porous substrate on which the inorganic particle layer is formed.

In a specific example embodiment, after performing drying for forming the inorganic particle layer, a process of aging the porous substrate on which the inorganic particle layer is formed may be further comprised. As an example embodiment, the drying may be performed at 60°C or lower or 50°C or lower. The aging may be performed at 50 to 100°C or 65 to 90°C, and an aging time may be 2 hours to 24 hours. Adhesion between the porous substrate and the inorganic particle layer or the inorganic particles, and also, between the inorganic particle layer and an electrode, in particular, between the inorganic particle layer and a positive electrode active material layer may be increased. Accordingly, the reaction between the functional group on the surface of the separator and the decomposition product of the electrolyte may occur more effectively to further decrease gas emissions.

The secondary battery according to an example embodiment of the present disclosure may comprise: a positive electrode, a negative electrode, the separator described above interposed between the positive electrode and the negative electrode, and an electrolyte. Herein, the positive electrode, the negative electrode, and the electrolyte may be used without limitation as long as they are commonly used in the secondary battery. In an example embodiment, the secondary battery may be a lithium secondary battery.

Hereinafter, the constituent elements of the secondary battery according to the present disclosure will be further described.

### [Positive electrode]

A positive electrode may comprise a positive electrode current collector and a positive electrode active material layer disposed on at least one surface of the positive electrode current collector.

### (Positive electrode current collector)

The positive electrode current collector may comprise stainless steel, nickel, aluminum, titanium, or an alloy thereof. The positive electrode current collector may comprise carbon, nickel, titanium, or aluminum of which the surface is treated with silver, or stainless steel. Though the positive electrode current collector is not limited thereto, it may be, for example, 10 um to 50 µm.

### (Positive electrode active material layer)

A positive electrode active material layer may comprise a positive electrode active material. The positive electrode active material may comprise a compound which may reversibly intercalate and deintercalate lithium ions.

According to example embodiments, conventionally used positive electrode active materials may be used without limitation, and for example, the positive electrode active material may comprise a lithium composite oxide. The positive electrode active may be a composite oxide of lithium with any one or more metals selected from the group consisting of cobalt, manganese, nickel, iron, and aluminum. In this case, since a metal in addition to lithium comprised in the composite oxide may act as a catalyst for a reaction of a functional group on the surface of the separator and a decomposition product of an electrolyte, gas emissions may be decreased more effectively.

The positive electrode active material may further comprise a coating element or a doping element. For example, the elements comprised in positive electrode active material described above and elements substantially identical or similar thereto may be used as a coating element or a doping element. For example, among the elements described above, a single or a combination of two or more is used as a coating element or a doping element.

The positive electrode active material may comprise a lithium cobalt oxide-based active material, a lithium manganese oxide-based active material, a lithium nickel oxide-based active material, or a lithium iron phosphate (LFP)-based active material (for example, LiFePO₄).

The positive electrode active material may comprise a nickel-cobalt-manganese (NCM)-based lithium oxide. In this case, an NCM-based lithium oxide having an increased nickel content may be used.

The content of Ni in the NCM-based lithium oxide (for example, a mole fraction of nickel in the total moles of nickel, cobalt, and manganese) may be 0.4 to 0.8 or 0.6 to 0.8, and the contents of Co and Mn may be independently of each other 0.1 to 0.3 or 0.1 to 0.2.

### (Method of manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode active material layer. The coating process may be performed by a method such as gravure coating, slot die coating, multilayer simultaneous die coating, imprinting, doctor blade coating, dip coating, bar coating, and casting, but is not limited thereto. The positive electrode active material layer may further comprise a binder, and may optionally further comprise a conductive material, a thickener, and optionally further components.

### (Positive electrode solvent)

A non-limiting example of the solvent used in the manufacture of the positive electrode active material layer may comprise N-methyl-2-pyrrolidone (NMP), dimethylformamide, dimethylacetamide, N,N-dimethylaminopropylamine, ethylene oxide, tetrahydrofuran, water, pure water, deionized water, distilled water, ethanol, isopropanol, methanol, acetone, n-propanol, t-butanol, and optionally similar or related solvents.

### (Positive electrode binder)

The binder may comprise polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), and optionally similar or related binders. In an example embodiment, a PVDF-based binder may be used as a positive electrode binder.

### (Positive electrode conductive material)

The conductive material may be added for increasing conductivity of the positive electrode active material layer and/or mobility of lithium ions or electrons. For example, the conductive material may comprise carbon-based conductive materials such as graphite, carbon black, acetylene black, ketjen black, graphene, carbon nanotubes, vapor-grown carbon fiber (VGCF), and carbon fiber, and/or metal-based conductive materials comprising tin, tin oxide, titanium oxide, perovskite materials such as LaSrCoO₃, LaSrMnO₃, but is not limited thereto.

### (Positive electrode thickener/ dispersant)

If necessary, the positive electrode active material layer may further comprise a thickener and/or a dispersant and optionally similar or related compounds. As an example embodiment, the positive electrode active material layer may comprise a thickener such as carboxymethyl cellulose (CMC).

### [Negative electrode]

A negative electrode may comprise a negative electrode current collector and a negative electrode active material layer disposed on at least one surface of the negative electrode current collector.

### (Negative electrode current collector)

A non-limiting example of the negative electrode current collector may comprise a copper foil, a nickel foil, a stainless steel foil, a titanium foil, a nickel foam, a copper foam, a polymer substrate coated with a conductive metal, and optionally similar or related current collector materials. Though the negative electrode current collector is not limited thereto, it may be, for example, 10 um to 50 µm.

### (Negative electrode active material layer)

A negative electrode active material layer may comprise a negative electrode active material. As the negative electrode active material, a material capable of adsorbing or desorbing lithium ions may be used. For example, the negative electrode active material may be a carbon-based material such as crystalline carbon, amorphous carbon, carbon composite, and carbon fiber; lithium metal; lithium alloy; a silicon (Si)-containing material, a tin (Sn)-containing material, or optionally similar or related negative electrode active material.

An example of the amorphous carbon may comprise hard carbon, soft carbon, coke, mesocarbon microbeads (MCMB), mesophase pitch-based carbon fiber (MPCF), and optionally similar or related amorphous carbon.

An example of the crystalline carbon may comprise graphite-based carbon such as natural graphite, artificial graphite, graphitized coke, graphitized MCMB, and graphitized MPCF.

The lithium metal may comprise a pure lithium metal or a lithium metal on which a protective layer is formed for suppressing dendrite growth. In an example embodiment, a lithium metal-containing layer which is deposited or coated on a negative electrode current collector may be used as a negative electrode active material. In an example embodiment, a lithium thin film layer may be used as a negative electrode active material layer.

An element comprised in the lithium alloy may comprise aluminum, zinc, bismuth, cadmium, antimony, silicon, lead, tin, gallium, indium, or optionally similar or related elements.

The silicon-containing material may provide more increased capacity characteristics. The silicon-containing material may comprise Si, SiOₓ (0<x<2), metal-doped SiOₓ (0<x<2), a silicon-carbon composite, and optionally similar or related Si-containing materials. The metal may comprise lithium and/or magnesium, and the metal-doped SiOₓ (0<x<2) may comprise metal silicate.

### (Method of manufacturing negative electrode)

For example, the negative electrode active material may be mixed into the solvent to prepare a negative electrode slurry. After coating/depositing the negative electrode slurry on the negative electrode current collector, drying and rolling may be performed to manufacture a negative electrode active material layer. The coating process may be performed by a method such as gravure coating, slot die coating, multilayer simultaneous die coating, imprinting, doctor blade coating, dip coating, bar coating, and casting, but is not limited thereto. The negative electrode active material layer may further comprise a binder, and may optionally further comprise a conductive material, a thickener, and possibly further components.

In some example embodiments, the negative electrode may comprise a negative electrode active material layer in a lithium metal form formed by a deposition/coating process.

### (Negative electrode solvent)

A non-limiting example of the solvent used in the manufacture of the negative electrode active material layer may comprise N-methyl-2-pyrrolidone (NMP), dimethylformamide, dimethylacetamide, N,N-dimethylaminopropylamine, ethylene oxide, tetrahydrofuran, water, pure water, deionized water, distilled water, ethanol, isopropanol, methanol, acetone, n-propanol, t-butanol, and optionally similar or related solvents.

### (Negative electrode binder/ conductive material/ thickener)

As the binder, the conductive material, and the thickener, the materials described above which may be used in the manufacture of a positive electrode may be used.

In some example embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and optionally similar or related polymer binder materials may be used as a negative electrode binder.

### [Electrode assembly]

According to example embodiments, the positive electrode, the negative electrode, and the separator may be repeatedly disposed to form an electrode assembly. In some example embodiments, the electrode assembly may be a winding type, a stacking type, a zigzag (z)-folding type, or a stack-folding type.

### [Electrolyte]

A lithium secondary battery may be defined by housing the electrode assembly in a case with an electrolyte. According to example embodiments, a nonaqueous electrolyte solution may be used as the electrolyte.

### (Lithium salt/ organic solvent)

A nonaqueous electrolyte solution comprises a lithium salt as an electrolyte and an organic solvent, the lithium salt is represented by, for example, Li⁺X⁻, and an example of an anion (X⁻) of the lithium salt may comprise F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and optionally similar or related anions. According to example embodiments, when the separator of the present disclosure is applied, gas emissions may be significantly decreased in the electrolyte comprising LiPF₆, but the present disclosure is not necessarily limited thereto.

The organic solvent has sufficient solubility of the lithium salt or the additive, and may comprise an organic compound having no reactivity in a battery. The organic solvent may comprise, for example, at least one of carbonate-based solvents, ester-based solvents, ether-based solvents, ketone-based solvents, alcohol-based solvents, and aprotic solvents. An example of the organic solvent may comprise propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, dimethoxyethane, diethoxyethane, sulfolane, γ-butyrolactone, propylene sulfite, and optionally similar or related solvents. These may be used alone or in combination of two more.

### (Additive)

The nonaqueous electrolyte solution may further comprise an additive. The additive may comprise, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds. The cyclic carbonate-based compound may comprise vinylene carbonate (VC), vinylethylene carbonate (VEC), or optionally similar or related additive compounds. The fluorine-substituted cyclic carbonate-based compound may comprise, for example, fluoroethylene carbonate (FEC) and optionally similar or related compounds. The sultone-based compound may comprise, for example, 1,3-propane sultone, 1,3-propene sultone, 1,4-butane sultone, and optionally similar or related compounds. The cyclic sulfate-based compound may comprise, for example, 1,2-ethylene sulfate, 1,2-propylene sulfate, and optionally similar or related compounds. The cyclic sulfite-based compound may comprise, for example, ethylene sulfite, butylene sulfite, and optionally similar or related compounds. The phosphate-based compound may comprise, for example, lithium difluoro bis-oxalato phosphate, lithium difluoro phosphate, and optionally similar or related compounds. The borate-based compound may comprise, for example, lithium bis(oxalate) borate and optionally similar or related compounds.

Hereinafter, the examples of the present disclosure will be further described with reference to the specific experimental examples. It is apparent to those skilled in the art that the examples and the comparative examples comprised in the experimental examples only illustrate the present disclosure and do not limit the appended claims, and various modifications and alterations of the examples may be made within the range of the scope and spirit of the present disclosure, and these modifications and alterations will fall within the appended claims.

First, methods of evaluating the characteristics of the separator and the secondary battery will be described.

### [Analysis of FT-IR spectrum]

Each battery manufactured according to the examples and the comparative examples was charged at room temperature (25°C) at a constant current-constant voltage (CC-CV) of 4.2 V using a charge/discharge cycle device, and then was discharged. Specifically, one cycle was charging each battery to 4.2 V at a constant current of 1 C at room temperature (25°C), charging at a constant voltage until the current became 0.01 C while maintaining 4.2 V, and then discharging to 2.5 V at a constant current of 1 C. After performing a total of 600 cycles of charge and discharge, a separator was separated from the battery, the surface was washed with a mixed solvent of ethylene carbonate and diethyl carbonate at a volume ratio of 1:1, and then the solvent was dried under vacuum. Thereafter, the dried separator was cut into a size of 1 cm×1 cm to prepare a measurement sample. Thereafter, a FT-IR spectrum was obtained under the conditions using FT-IR equipment (Thermo Scientific, Nicolet iN10 Infrared Microscope) equipped with a mercury cadmium telluride (MCT) detector.
- resolution: 4 cm⁻¹
- scans: 16
- range: 4000 to 675 cm⁻¹
- measurement point per sample: 15 points (10 um interval)
* 15 points (10 um interval) mapping 3 position

### [Analysis of life characteristics]

A total of 400 cycles of charge and discharge were performed on each battery manufactured according to the examples and the comparative examples in the same manner as described above for the FT-IR spectrum measurement. Resistance (mQ) and discharge capacity (mAh) were measured per 100 cycles. Specifically, direct current internal resistance (DC-IR) was measured by a J-pulse method as the resistance. The resistance (mQ) or the discharge capacity (mAh) of the examples were relatively evaluated based on the resistance (mQ) or the discharge capacity (mAh) of Comparative Example 1 according to each cycle by performing calculation according to the following equation: [(resistance at nth cycle of Comparative Example 1 - resistance at nth cycle of the example)/resistance at nth cycle of Comparative Example 1] × 100 [(discharge capacity at nth cycle of the example - discharge capacity at nth cycle of Comparative Example 1)/discharge capacity at nth cycle of Comparative Example 1] × 100

### [Analysis of gas emissions]

Gas emissions were measured by preparing a 100% charged SOC battery, measuring volume using a density meter, storing the battery in an oven at 60°C for 10 weeks, and measuring the volume in the same manner. The volume changed relative to the volume at week 0 of storage (volume increase rate ΔV) was calculated by the following equation. The difference in the values between the batteries of the examples and the comparative examples and the battery of Comparative Example 1 was determined and relatively evaluated. Volume increase rate ΔV(%) = [volume at week 10 - volume at week 0)/volume at week 0] × 100

### <Preparation Example 1>

Monomer components of 38 parts by weight of methacrylamide, 23 parts by weight of acrylic acid, 3 parts by weight of butyl acrylate, 7 parts by weight of acrylonitrile, and 7 parts by weight of 2-hydroxyethylacrylate, 100 parts by weight of distilled water, and 0.60 parts by weight of n-dodecylmercaptan as an emulsifier were mixed to prepare a monomer solution.

A reactor having a stirrer, a thermometer, a nitrogen inlet, and a circulation condenser was prepared, and when the internal temperature of the reactor reached 35°C, the monomer solution and 0.001 parts by weight of benzoyl peroxide and 0.020 parts by weight of sodium formaldehyde sulfoxylate (SFS) as a polymerization initiator were added dropwise for 3 hours to allow the reaction to proceed. Thereafter, 0.0001 parts by weight of benzoyl peroxide and 0.002 parts by weight of sodium formaldehyde sulfoxylate were further added to remove residual monomers, and the reaction was performed for 2 hours to prepare binder particles in a latex form. The binder particles prepared above had an average particle diameter (D50) of 110 nm, a weight average molecular weight (Mw) of 300,000 g/mol, and a glass transition temperature (Tg) of 57.8°C.

### <Preparation Example 2>

Binder particles in a latex form were prepared in the same manner as in Preparation Example 1, except that 61 parts by weight of acrylic acid and 19 parts by weight of acrylonitrile were used as the monomer components. The binder particles prepared above had an average particle diameter (D50) of 110 nm, a weight average molecular weight (Mw) of 250,000 g/mol, and a glass transition temperature (Tg) of 55°C.

### <Example 1>

### <Preparation of slurry composition>

92.8 wt% of boehmite (γ-AlO(OH)) having an average particle diameter (D50) of 800 nm and 7.2 wt% of the binder particles prepared in Preparation Example 1 based on the total weight of the solid content were added to water, and stirring was performed to prepare a slurry composition having a solid content concentration of 33 wt%.

### Manufacture of separator

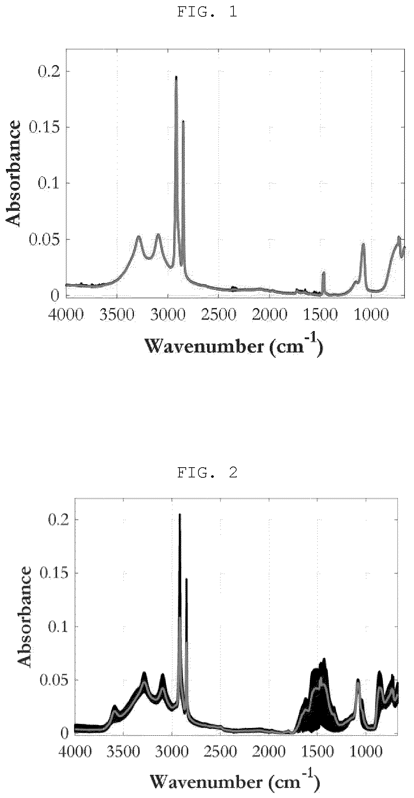

Both surfaces of a polyethylene porous film (porosity: 50%, Gurley permeability: 70 sec/100 cc) having a thickness of 9 um as a porous substrate were treated with corona discharge to introduce a polar functional group to the surface, and the corona discharge treatment at this time was performed at a power density of 2 W/mm and a speed of 3 to 5 mpm (meter per minute). It was confirmed by a Fourier-transform infrared spectroscopy (FT-IR) that both surfaces of the porous substrate treated with corona discharge had a carboxylic acid group and a hydroxyl group. The slurry composition prepared above was applied on both surfaces of the porous substrate and dried at 50°C to form an inorganic particle layer having a thickness of 2.0 um on each of both surfaces of the porous substrate. The substrate on which the inorganic particle layer was formed was aged at 80°C for 12 hours to manufacture a separator. The FT-IR spectrum of the separator manufactured above is shown in FIG. 1.

### Manufacture of positive electrode

92 wt% of LiNiₓCo_{y}Mn_{z}O₂ (x = 0.4-0.8, y = 0.1-0.3, z = 0.1-0.3) as a positive electrode active material, 4 wt% of carbon black as a conductive material, and 4 wt% of polyvinylidene fluoride (PVdF) as a binder were added to N-methyl-2-pyrrolidone (NMP) as a solvent, and stirring was performed to prepare a uniform positive electrode slurry. The positive electrode slurry was applied on an aluminum (Al) thin film having a thickness of 30 µm, dried, and pressed to manufacture a positive electrode having a total thickness of 150 µm.

### Manufacture of negative electrode

96 wt% of graphite carbon as a negative electrode active material, 3 wt% of carbon black as a conductive material, and 1 wt% of PVdF as a binder were added to NMP as a solvent, and stirring was performed to prepare a uniform negative electrode slurry. The negative electrode slurry was applied on a copper (Cu) thin film having a thickness of 20 µm, dried, and pressed to manufacture a negative electrode having a total thickness of 150 µm.

### Manufacture of battery

The separator manufactured above was placed between the positive electrode and the negative electrode, wound, and added to an aluminum pack. Thereafter, an electrolyte in which 1 M lithium hexafluorophosphate (LiPF₆) was dissolved in a solution comprising ethylene carbonate and diethyl carbonate at a volume ratio of 1:1 was injected, and the pack was sealed to manufacture a secondary battery having a capacity of 2 Ah. The characteristics of the secondary battery are listed in the following Table 1.

After performing a total of 600 cycles of charge and discharge on the manufactured battery, the separator was separated from the battery, the surface was washed with a mixed solvent of ethylene carbonate and diethyl carbonate at a volume ratio of 1:1, and then the solvent was dried under vacuum. The FT-IR spectrum of the dried separator is shown in FIG. 2. Referring to FIGS. 1 and 2, as the charge and discharge were performed, a peak having the highest intensity at 3591 cm⁻¹ in a range of 3800 cm⁻¹ to 3500 cm⁻¹ and a peak having the highest intensity at 1625 cm⁻¹ and 1511 cm⁻¹ in a range of 1800 cm⁻¹ to 1500 cm⁻¹ which were not shown in the FT-IR spectrum of the separator before the charge and discharge were shown. In addition, it was confirmed that a peak in a range of 3800 cm⁻¹ to 3500 cm⁻¹ and a peak in a range of 1800 cm⁻¹ to 1500 cm⁻¹ were shown also in the FT-IR spectrum after performing charge and discharge of the separator manufactured according to the remaining examples.

### <Example 2>

A separator and a secondary battery were manufactured in the same manner as in Example 1, except that the contents of the components comprised in the slurry composition were changed into 96.8 wt% of boehmite and 3.2 wt% of the binder particles of Preparation Example 1. The characteristics of the secondary battery are listed in the following Table 1.

### <Example 3>

A separator and a secondary battery were manufactured in the same manner as in Example 1, except that the binder particles prepared in Preparation Example 2 were used instead of the binder particles prepared in Preparation Example 1 in the preparation of the slurry composition. The characteristics of the secondary battery are listed in the following Table 1.

### <Example 4>

A separator and a secondary battery were manufactured in the same manner as in Example 1, except that aging was not performed in the manufacture of the separator. The characteristics of the secondary battery are listed in the following Table 1.

### <Comparative Example 1>

### <Preparation of slurry composition>

A polyacrylamide-based aqueous polymer (Mw: 300,000 g/mol) prepared using monomer components of 932 mmol of acrylamide, 89 mmol of 2-hydroxymethylmethacrylate, and 0.324 mmol of N,N'-methylenebisacrylamide was prepared.

96.8 wt% of boehmite (γ-AlO(OH)) having an average particle diameter (D50) of 800 nm and 3.2 wt% of the polyacrylamide-based aqueous polymer based on the total weight of the solid were added to water, and then stirring was performed to prepare a slurry composition having a solid content concentration of 32 wt%.

### Manufacture of separator

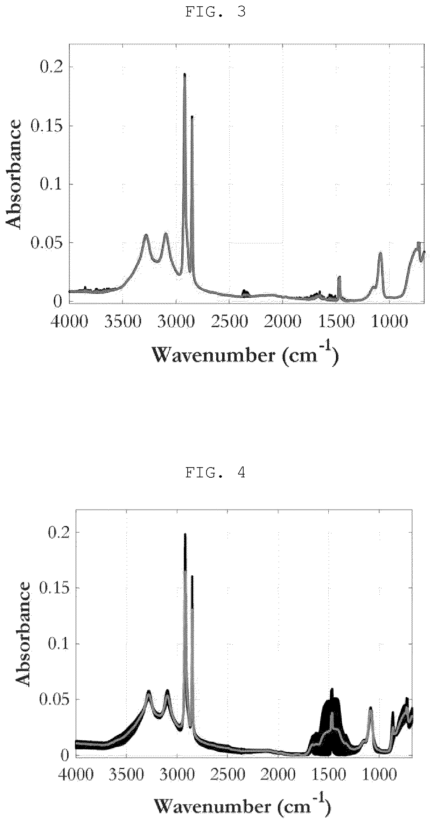

Both surfaces of a polyethylene porous film (porosity: 50%, Gurley permeability: 70 sec/100 cc) having a thickness of 9 um as a porous substrate were treated with corona discharge to introduce a polar functional group to the surface, and the corona discharge treatment at this time was performed at a power density of 2 W/mm and a speed of 3 to 5 mpm (meter per minute). It was confirmed by a Fourier-transform infrared spectroscopy (FT-IR) that both surfaces of the porous substrate treated with corona discharge had a carboxylic acid group and a hydroxyl group. The slurry composition prepared above was applied on both surfaces of the porous substrate and dried at 50°C to form an inorganic particle layer having a thickness of 2.0 um on each of both surfaces of the porous substrate. The substrate on which the inorganic particle layer was formed was aged at 80°C for 12 hours to manufacture a separator. The FT-IR spectrum of the separator manufactured above is shown in FIG. 3.

### Manufacture of positive electrode, negative electrode, and battery

A positive electrode and a negative electrode were manufactured in the same manner as in Example 1, and a secondary battery was manufactured using them with the separator manufactured above. The characteristics of the secondary battery are listed in the following Table 1.

After performing a total of 600 cycles of charge and discharge on the manufactured battery, the separator was separated from the battery, the surface was washed with a mixed solvent of ethylene carbonate and diethyl carbonate at a volume ratio of 1:1, and then the solvent was dried under vacuum. The FT-IR spectrum of the dried separator is shown in FIG. 4. Referring to FIGS. 3 and 4, no peak in a range of 3800 to 3400 cm⁻¹ was found in the spectrum after performing charge and discharge in Comparative Example 1, unlike the examples.

### <Comparative Example 2>

### <Preparation of slurry composition>

Monomer components of 61 parts by weight of methacrylamide, 10 parts by weight of acrylic acid, 1 part by weight of butyl acrylate, 3 parts by weight of acrylonitrile, and 3 parts by weight of 2-hydroxyethylacrylate, 100 parts by weight of distilled water, and 0.60 parts by weight of n-dodecylmercaptan as an emulsifier were mixed to prepare a monomer solution.

A reactor of a four-neck flask having a stirrer, a thermometer, a nitrogen inlet, and a circulation condenser was prepared, and when the internal temperature of the reactor reached 35°C, the monomer solution and 0.001 parts by weight of benzoyl peroxide and 0.020 parts by weight of sodium formaldehyde sulfoxylate (SFS) as a polymerization initiator were added dropwise for 3 hours to allow the reaction to proceed. Thereafter, 0.0001 parts by weight of benzoyl peroxide and 0.002 parts by weight of sodium formaldehyde sulfoxylate were further added to remove residual monomers, and the reaction was performed for 2 hours to prepare binder particles in a latex form. The binder particles prepared above had an average particle diameter (D50) of 120 nm, a weight average molecular weight (Mw) of 320,000 g/mol, and a glass transition temperature (Tg) of 105.5°C.

92.8 wt% of boehmite (γ-AlO(OH)) having an average particle diameter (D50) of 800 nm and 7.2 wt% of the binder particles based on the total weight of the solid were added to water, and then stirring was performed to prepare a slurry composition having a solid content concentration of 33 wt%.

### Manufacture of separator

Both surfaces of a polyethylene porous film (porosity: 50%, Gurley permeability: 70 sec/100 cc) having a thickness of 9 um as a porous substrate were treated with corona discharge to introduce a polar functional group to the surface, and the corona discharge treatment at this time was performed at a power density of 2 W/mm and a speed of 3 to 5 mpm (meter per minute). It was confirmed by a Fourier-transform infrared spectroscopy (FT-IR) that both surfaces of the porous substrate treated with corona discharge had a carboxylic acid group and a hydroxyl group. The slurry composition prepared above was applied on both surfaces of the porous substrate and dried at 50°C to form an inorganic particle layer having a thickness of 2.0 um on each of both surfaces of the porous substrate. The substrate on which the inorganic particle layer was formed was aged at 80°C for 12 hours to manufacture a separator.

### Manufacture of positive electrode, negative electrode, and battery

A positive electrode and a negative electrode were manufactured in the same manner as in Example 1, and a secondary battery was manufactured using them with the separator manufactured above. The characteristics of the secondary battery are listed in the following Table 1. As a result of measuring the FT-IR spectrum before and after operating cycles of the separator manufactured above, no peak in a range of 3800 to 3400 cm⁻¹ was found after performing 600 cycles of charge and discharge, like Comparative Example 1.

### <Comparative Example 3>

### <Preparation of slurry composition>

An aqueous polymer prepared by using monomer components of 12 parts by weight of methacrylamide, 43 parts by weight of acrylic acid, 1 part by weight of butyl acrylate, 7 parts by weight of acrylonitrile, and 14 parts by weight of 2-hydroxyethylacrylate was prepared. The aqueous polymer used at this time had a weight average molecular weight (Mw) of 250,000 g/mol and a glass transition temperature of 56°C.

96.8 wt% of boehmite (γ-AlO(OH)) having an average particle diameter (D50) of 800 nm and 3.2 wt% of the aqueous polymer based on the total weight of the solid were added to water, and then stirring was performed to prepare a slurry composition having a solid content concentration of 32 wt%.

### Manufacture of separator

Both surfaces of a polyethylene porous film (porosity: 50%, Gurley permeability: 70 sec/100 cc) having a thickness of 9 um as a porous substrate were treated with corona discharge to introduce a polar functional group to the surface, and the corona discharge treatment at this time was performed at a power density of 2 W/mm and a speed of 3 to 5 mpm (meter per minute). It was confirmed by a Fourier-transform infrared spectroscopy (FT-IR) that both surfaces of the porous substrate treated with corona discharge had a carboxylic acid group and a hydroxyl group. The slurry composition prepared above was applied on both surfaces of the porous substrate and dried at 50°C to form an inorganic particle layer having a thickness of 2.0 um on each of both surfaces of the porous substrate. The substrate on which the inorganic particle layer was formed was aged at 80°C for 12 hours to manufacture a separator.

### Manufacture of positive electrode, negative electrode, and battery

A positive electrode and a negative electrode were manufactured in the same manner as in Example 1, and a secondary battery was manufactured using them with the separator manufactured above. The characteristics of the secondary battery are listed in the following Table 1. As a result of measuring the FT-IR spectrum before and after operating cycles of the separator manufactured above, no peak in a range of 3800 to 3400 cm⁻¹ was found after performing 600 cycles of charge and discharge, like Comparative Example 1.

### <Comparative Example 4>

### <Preparation of slurry composition>

An aqueous polymer prepared by using monomer components of 12 parts by weight of methacrylamide, 43 parts by weight of acrylic acid, 1 part by weight of butyl acrylate, 7 parts by weight of acrylonitrile, and 14 parts by weight of 2-hydroxyethylacrylate was prepared. The aqueous polymer used at this time had a weight average molecular weight (Mw) of 250,000 g/mol and a glass transition temperature of 56°C.

92.8 wt% of boehmite (γ-AlO(OH)) having an average particle diameter (D50) of 800 nm and 7.2 wt% of the aqueous polymer based on the total weight of the solid were added to water, and then stirring was performed to prepare a slurry composition having a solid content concentration of 33 wt%.

### Manufacture of separator

Both surfaces of a polyethylene porous film (porosity: 50%, Gurley permeability: 70 sec/100 cc) having a thickness of 9 um as a porous substrate were treated with corona discharge to introduce a polar functional group to the surface, and the corona discharge treatment at this time was performed at a power density of 2 W/mm and a speed of 3 to 5 mpm (meter per minute). It was confirmed by a Fourier-transform infrared spectroscopy (FT-IR) that both surfaces of the porous substrate treated with corona discharge had a carboxylic acid group and a hydroxyl group. The slurry composition prepared above was applied on both surfaces of the porous substrate and dried at 50°C to form an inorganic particle layer having a thickness of 2.0 um on each of both surfaces of the porous substrate. The substrate on which the inorganic particle layer was formed was aged at 80°C for 12 hours to manufacture a separator. As a result, since the viscosity of the slurry composition was too high, coating was not done properly.

### Manufacture of positive electrode, negative electrode, and battery

A positive electrode and a negative electrode were manufactured in the same manner as in Example 1, and a secondary battery was manufactured using them with the separator manufactured above. The characteristics of the secondary battery are listed in the following Table 1. As a result of measuring the FT-IR spectrum before and after operating cycles of the separator manufactured above, no peak in a range of 3800 to 3400 cm⁻¹ was found after performing 600 cycles of charge and discharge, like Comparative Example 1.

**[Table 1]**

| | Resistance (mΩ) | | | | Discharge capacity (mAh) | | | | Volume increase rate ΔV (%) |
|---|---|---|---|---|---|---|---|---|---|
| Cycle | 100 | 200 | 300 | 400 | 100 | 200 | 300 | 400 | |
| Example 1 | Lower by 2.9% | Lower by 7.4% | Lower by 36.8% | Lower by 28.5% | Higher by 0.1% | Higher by 0.1% | Higher by 1.4% | Higher by 1.9% | Lower by 6.5% |
| Example 2 | Lower by 1.6% | Lower by 3.3% | Lower by5.1% | Lower by 12.5% | Identical | Higher by 0.1% | Higher by 1.0% | Higher by 1.1% | Lower by 3.1% |
| Example 3 | Lower by 1.0% | Lower by 1.1% | Lower by 3.5% | Lower by 4.7% | Identical | Higher by 0.1% | Higher by 0.4% | Higher by 0.4% | Lower by 12% |
| Example 4 | Lower by 1.1% | Lower by 1.3% | Lower by 4.6% | Lower by 5.5% | Identical | Higher by 0.1% | Higher by 02% | Higher by 0.3% | Lower by 0.7% |
| Comparative Example 1 | Standard | Standard | Standard | Standard | Standard | Standard | Standard | Standard | Standard |
| Comparative Example 2 | Higher by 0.1% | Higher by 02% | Higher by 0.6% | Higher by 0.6% | Lower by 0.1% | Lower by 0.2% | Lower by 0.4% | Lower by 0.8% | Higherby 4.3% |
| Comparative Example 3 | Higher by 2.9% | Higher by 7.4% | Higher by 36.8% | Higher by 28.5% | Lower by 0.4% | Lower by 0.1% | Lower by 1.4% | Lower by 1.9% | Higherby 2.1% |
| Comparative Example 4 | Higher by 13.0% | Higher by 15.4% | Higher by 55.3% | Higher by 57.8% | Lower by5.1% | Lower by 5.5% | Lower by 6.8% | Lower by 72% | Higherby 5.5% |

Referring to Table 1, since the secondary batteries of Examples 1 to 4 used the separator having the combination of peaks at specific positions in the FT-IR spectrum after performing 600 cycles of charge and discharge, they had a better effect of suppressing a volume increase, better resistance properties, and better life characteristics than the batteries using the separator of the comparative examples which did not have the combination of the peaks.

Thus, it was found therefrom that the separator according to an example embodiment may suppress the decomposition reaction of an electrolyte effectively to significantly decrease gas emissions, and when the separator is used, battery resistance may be reduced to provide a secondary battery having excellent life characteristics.

However, the batteries of Comparative Examples 1 to 4 which did not have the combination of peaks at specific positions in the FT-IR spectrum after performing 600 cycles of charge and discharge were confirmed to have the effect of suppressing a volume increase, resistance properties, and life characteristics which were reduced as compared with those of the examples.

The separator according to an example embodiment of the present disclosure may significantly decrease gas emissions.

The secondary battery using the separator according to an example embodiment of the present disclosure may have resistance characteristics and life characteristics due to excellent long-term operation.

In addition, the secondary battery using the separator according to an example embodiment of the present disclosure may have an effect of significantly suppressing volume expansion.

The above description is only an example to which the principle of the present disclosure is applied, and other constitutions may be further comprised without departing from the scope of the present disclosure.

## Claims

1. A separator for an electrochemical device, comprising:
a porous substrate; and
an inorganic particle layer which is formed on or above at least one surface of the porous substrate and comprises a binder and inorganic particles,
wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge, and
one cycle of the charge and discharge is charging to 4.2 V at a constant current of 1 C at room temperature, charging at a constant voltage until the current becomes 0.01 C while maintaining 4.2 V, and then discharging to 2.5 V at a constant current of 1 C.

2. The separator of claim 1, wherein the binder comprises a nitrile group,
preferably, wherein the binder comprises a structural unit derived from a (meth)acrylonitrile-based monomer,
optionally, wherein the binder further comprises any one or more structural units selected from the group consisting of a structural unit derived from a (meth)acrylamide-based monomer and a structural unit derived from a (meth)acrylate-based monomer having a polar group.

3. The separator of claim 1 or 2, wherein the binder has a weight average molecular weight of 10,000 to 2,000,000 g/mol, preferably of 100,000 to 400,000 g/mol, more preferably of 200,000 to 300,000 g/mol, and even more preferably of 250,000 g/mol to 300,000 g/mol;
optionally, wherein the binder has a glass transition temperature of 40 to 80°C, preferably of 50 to 70°C, more preferably of 50 to 60°C.

4. The separator of any one of claims 1 to 3, wherein the binder is a particulate binder; preferably the binder is a particulate binder having an average particle diameter (D50) in a range of 80 to 110 nm, preferably in a range 100 to 110 nm, more preferably the D50 is about 110 nm;
optionally, wherein the binder is a water-dispersible binder.

5. The separator of any one of claims 1 to 4, wherein the binder is comprised at 1 to 30 wt% based on the total weight of the inorganic particle layer.

6. The separator of any one of claims 1 to 5, wherein the inorganic particles comprise any one or two or more selected from the group consisting of metal hydroxides, metal oxides, metal nitrides, metal carbides, and metal sulfates.

7. The separator of any one of claims 1 to 6, wherein the porous substrate comprises a polar functional group on the surface.

8. A method of manufacturing a separator for an electrochemical device, the method comprising:
preparing a slurry composition comprising a binder and inorganic particles; and
applying the slurry composition on at least one surface of a porous substrate to form an inorganic particle layer,
wherein the separator has a first peak shown in a range of 3800 to 3400 cm⁻¹ and a second peak shown in a range of 1800 to 1500 cm⁻¹ in a spectrum by Fourier-transform infrared spectroscopy (FT-IR) measured after performing 600 cycles of charge and discharge, and
one cycle of the charge and discharge is charging to 4.2 V at a constant current of 1 C at room temperature, charging at a constant voltage until the current becomes 0.01 C while maintaining 4.2 V, and then discharging to 2.5 V at a constant current of 1 C.

9. The method of manufacturing a separator of claim 8, wherein the binder comprises a nitrile group,
preferably, wherein the binder comprises a structural unit derived from a (meth)acrylonitrile-based monomer,
optionally, wherein the binder further comprises any one or more structural units selected from the group consisting of a structural unit derived from a (meth)acrylamide-based monomer and a structural unit derived from a (meth)acrylate-based monomer having a polar group.

10. The method of manufacturing a separator of claim 8 or 9, wherein the binder is a particulate binder,
optionally, wherein the binder is a water-dispersible binder.

11. The method of manufacturing a separator of any one of claims 8 to 10, wherein the binder has a weight average molecular weight of 10,000 to 2,000,000 g/mol,
optionally, wherein the binder has a glass transition temperature of 40 to 80°C.

12. The method of manufacturing a separator of any one of claims 8 to 11, further comprising: before the forming of an inorganic particle layer, introducing a polar functional group to the surface of the porous substrate by a hydrophilic surface treatment.

13. The method of manufacturing a separator of any one of claims 8 to 12, wherein the hydrophilic surface treatment is performed by comprising one or more of a corona discharge treatment and a plasma discharge treatment.

14. The method of manufacturing a separator of any one of claims 8 to 13, further comprising: after the forming of an inorganic particle layer, aging the porous substrate on which the inorganic particle layer is formed.

15. A secondary battery comprising: a positive electrode; a negative electrode; the separator according to any one of claims 1 to 7 interposed between the positive electrode and the negative electrode; and an electrolyte.
